# EUROPÄISCHE PATENTANMELDUNG

(11) **EP 3 100 979 A1**
(43) Veröffentlichungstag der Anmeldung: **07.12.2016**
(21) Anmeldenummer: 15170227.1
(22) Anmeldetag: 02.06.2015
(51) Int. Cl.: C01B 33/107, C22B 7/00, C07F 7/12

(54) **AUFBEREITUNG FEINTEILIGER FESTSTOFFE BEI DER HERSTELLUNG VON CHLORSILANEN DURCH SINTERN BEI NIEDRIGEN TEMPERATUREN**

(71) Anmelder: Evonik Degussa GmbH, 45128 Essen (DE)
(72) Erfinder: MARINAS PÉREZ, Dr. Janaina, 79730 Murg (DE); MÜH, Dr. Ekkehard, 79618 Rheinfelden (DE); RAULEDER, Dr. Hartwig, 79618 Rheinfelden (DE); LANG, Dr. Jürgen Erwin, 76229 Karlsruhe (DE)

(57) **Zusammenfassung**

Gegenstand der Erfindung ist ein Verfahren zur Aufbereitung feinteiliger Feststoffe bei der Herstellung von Chlorsilanen, das dadurch gekennzeichnet ist, dass die feinteiligen Feststoffe bei niedrigen Temperaturen gesintert und/oder geschmolzen werden.

## Beschreibung

Die Erfindung betrifft ein Verfahren zur Aufbereitung feinteiliger Feststoffe, die bei der Herstellung von Chlorsilanen anfallen, durch Sintern und/oder Schmelzen der feinteiligen Feststoffe.

Chlorsilane wie Siliziumtetrachlorid (SiCl₄, abgekürzt *STC),* Trichlorsilan (HSiCl₃, abgekürzt *TCS*) und Dichlorsilan (H₂SiCl₂) stellen eine wichtige Stoffklasse mit einem breiten Anwendungsgebiet dar. So werden sie eingesetzt als Rohstoff zur Herstellung von SiO₂, dem sogenannten *fumed silica,* als Ausgangsmaterial für Organosilane und Kieselsäureester sowie als Edukte für Lichtwellenleiter und Halbleiter- bzw. Solar-Silizium.

Es ist daher von höchster technischer und wirtschaftlicher Bedeutung, Chlorsilane in großer Menge kostengünstig und sicher herstellen zu können.

Silizium (Si) und Chlorwasserstoff (HCl) und/oder Chlor (Cl) werden in einem Reaktor, z. B. Wirbelschichtreaktor oder Festbettreaktor oder Rührbettreaktor umgesetzt, wodurch sich anorganische Chlorsilane wie SiCl₄ und/oder HSiCl₃ und/oder H₂SiCl₂ oder Gemische daraus bilden und als Produktgase den Reaktor verlassen und anschließend weiter behandelt werden.

Die Produktgase enthalten produktionsbedingt Feststoffe wie zum Beispiel Pulver und/oder Staub enthaltend Silizium, Eisen, Eisenchlorid und/oder Aluminiumchlorid. Beispielsweise sind Eisenchlorid und Aluminiumchlorid Reaktionsnebenprodukte, die davon herrühren, dass das eingesetzte Roh-Silizium diese Metalle in geringen Mengen als Kontaminationen enthält, die nach der Verflüssigung der Produktgase, der sogenannten Brüden, in der Flüssigphase zurückbleiben und sich im Behälter für die Flüssigphase absetzen. Dadurch können sie aus dem gebildeten Chlorsilangemisch abgetrennt werden.

Auch in einem Reaktor für die Chlorsilanherstellung bleiben oben genannte Feststoffe zurück. Besonders beim Wirbelschichtverfahren zur Herstellung von Trichlorsilan und Siliziumtetrachlorid treten diese Feststoffe in Form von Pulver, Staub, zum Beispiel Filterstaub, und/oder Asche, zum Beispiel Heißgasfilterasche auf. Solche Feststoffe werden im Rahmen der Erfindung unter den Begriff "feinteilige Feststoffe" zusammengefasst.

Die feinteiligen Feststoffe weisen hauptsächlich Silizium und Eisen auf, und sie können außerdem Chlorverbindungen enthalten. Zusammen mit den Chlorverbindungen, die unter den Reaktionsbedingungen gasförmige Reaktionsprodukte sind, zum Beispiel TCS und STC, werden die feinteiligen Feststoffe aus dem Reaktor getragen.

Beim Wirbelschichtverfahren wird gemahlenes metallurgisches Silizium mit einem Durchmesser von etwa 500 µm mit Chlorwasserstoff umgesetzt. Während des Ablaufs der Reaktion werden die Siliziumteilchen immer kleiner und können den Reaktor schließlich als Stäube verlassen. Diese Stäube werden üblicherweise mittels Filtern oder Zyklonen abgetrennt, bevor die Reaktionsprodukte TCS und STC kondensiert werden. Da sie sehr fein sind und neben Eisen noch einen großen Siliziumanteil enthalten, sind sie ein wertvoller Rohstoff. Die Größenverteilung der die Stäube ausmachenden Partikel ist dem Fachmann bekannt. Die Partikelgrößen, im Rahmen der unten geschilderten Erfindung gleichbedeutend mit den mittleren Partikeldurchmessern, sind dem Fachmann im Zusammenhang mit dem Begriff Stäube ebenfalls bekannt. Eine Übersicht findet sich beispielsweise bei Römpp im Stand von August 2005.

Silizium haltige Feststoffe fallen bei der Herstellung von Silizium aus Monosilan durch Abscheideprozesse an. Solche Feststoffe sind häufig Gemische aus Produktgrobanteilen, die über Siebe aus dem Prozess abgetrennt werden, sind ebenfalls Analysenrückstände und nicht spezifikationsgerechte Ware. Der Siliziumanteil beträgt oft mehr als 99 %.

Die Patentschrift DE 10 2009 037 155 B3 sieht vor, die aus der Wirbelschicht ausgetragenen Stäube in einem zweiten angeschlossen Wirbelschichtreaktor umzusetzen. Dieses Verfahren hat den Nachteil, dass der Großteil des Feststoffes auf Grund seiner extremen Feinteiligkeit auch aus dem zweiten Reaktor ausgetragen wird, ohne stofflich umgesetzt zu werden.

DE 10 2009 020 143 A1 offenbart ein Verfahren zur Aufarbeitung von Sägeabfällen aus der Waferherstellung. In diesem Fall werden Silizium und organische Verbindungen enthaltende Sägeabfälle auf einem Granulierteller granuliert und sollen so für den weiteren Einsatz in der Chlorsilanherstellung vorbereitet werden. Die Sägeslurries, aus denen diese Si haltigen Sägespäne oder Stäube abgetrennt werden, fallen als Filterkuchen oder Suspensionen dieser Abfälle in Silikonölen oder Polyethylenglykolen an. Doch ist die Separation der einzelnen Komponenten aufwändig, und der hohe Anteil organischer Verbindungen neben Silizium in diesem Strom führt in den Chlorsilanreaktoren zur Bildung zahlreicher unerwünschter Nebenprodukte. Zudem sind die aus dem kristallinen Material hergestellten Granulate mechanisch nur wenig stabil und zerfallen schnell wieder.

Der Möglichkeit, die oben genannten Feststoffe zu größeren Agglomeraten bzw. Stücken zu verbinden, indem diese geschmolzen oder gesintert werden, wird allgemein der Nachteil zugesprochen, dass dafür hohe Schmelztemperaturen erreicht werden müssen und daher ein hoher Energieaufwand notwendig ist. Diese Vorgehensweise der Wiederverwertung wird also vermieden, da sie unwirtschaftlich zu sein scheint.

Es bestand daher die Aufgabe, ein Verfahren bereit zu stellen, das die feinteiligen Feststoffe in wirtschaftlicher Weise dergestalt verändert, dass sie wieder dem Chlorsilanherstellprozess zugeführt werden können.

Die Aufgabe wird gelöst durch ein Verfahren zur Aufbereitung der feinteiligen Feststoffe, in dessen die Feststoffe bei überraschend geringen Temperaturen agglomeriert werden, so dass größere, makroskopische Körper, beispielsweise Brocken, erhalten werden.

Gegenstand der Erfindung ist ein Verfahren zur Aufbereitung feinteiliger Feststoffe bei der Herstellung von Chlorsilanen, welches dadurch gekennzeichnet ist, dass die feinteiligen Feststoffe während einer Zeitdauer von 1 min bis 24 h auf einer Temperatur von 25 °C bis 2500 °C gehalten werden, wobei eine Agglomerierung der feinen Partikel im Volumen der feinteiligen Feststoffe eintritt.

Der Vorteil des Verfahrens besteht darin, dass makroskopische Körper erhalten werden, deren mittlere Partikelgröße weit über der für Partikel von Stäuben üblichen Größe liegt. Diese Körper können leicht gehandhabt werden, beispielsweise gefördert, in Container verbracht, oder versackt werden. Die erfindungsgemäß aufbereiteten Feststoffe führt man damit leicht in den Chlorsilan Herstellprozess zurück. Aufwändige Filterverfahren, etwa zum Schutz vor Feinstäuben, sind demnach überflüssig.

Im Folgenden wird die Erfindung näher erläutert.

Das Verfahren wird vorzugsweise bei einer Temperatur von 25 °C bis 500 °C, besonders bevorzugt von 50 °C bis 200 °C, und/oder während einer Zeitdauer von 1 min bis 1 h, vorzugsweise während 1 min bis 50 min, besonders bevorzugt von 5 min bis 30 min durchgeführt. Überraschend werden bereits unter jeder dieser Bedingungen aus Zeitdauer und im Intervall gewählter Temperatur aus den feinteiligen Feststoffen makroskopische Körper oder Brocken erhalten.

Ohne an eine Theorie gebunden zu sein, kann vermutet werden, dass unter den feinteiligen Feststoffen solche sind, die eine derart geringe Größe aufweisen, dass der mit den relativ geringen Temperaturen einhergehende Wärmeeintrag zur Ausbildung von Sinterhälsen zwischen den Partikeln der feinteiligen Feststoffe führt. Die Partikel der feinteiligen Feststoffe sind zumindest teilweise kristalliner Natur. Je kleiner diese Partikel sind, bei desto geringerem Wärmeenergie Eintrag denaturieren ihre Oberflächenstrukturen, so dass sich zwischen benachbarten Partikeln die Sinterhälse ausbilden. Die erfindungsgemäße Vorgehensweise agglomeriert die feinteiligen Feststoffe demnach mindestens teilweise zu makroskopischen Körpern oder Brocken.

In dem erfindungsgemäßen Verfahren ist es weiterhin vorteilhaft, feinteilige Feststoffe einzusetzen, deren feine Partikel einen mittleren Durchmesser d_{50%} von 0,1 µm bis 200 µm, vorzugsweise von 0,1 µm bis 50 µm, besonders bevorzugt von 0,1 µm bis 1 µm aufweisen. Der mittlere Durchmesser d_{50%} ist eine dem Fachmann bekannte Größe, die mit fachüblichen Methoden ermittelt werden kann.

Die Feststoffe aus der Chlorsilansynthese enthalten aufgrund der vorherrschenden Reaktionsbedingungen im Chlorsilanherstellprozess HCl und hydrolysierbare Silizium-Halogen-Bindungen, die an den Feststoffen anhaften, welche somit einen sauren pH Wert aufweisen.

Fügt man bei der Durchführung des erfindungsgemäßen Verfahrens anorganische Bindemittel ein, ergibt dies den Vorteil eines alkalischen pH Wertes. Das Bindemittel neutralisiert demnach den pH Wert der Feinstäube. Die unangenehme Eigenschaft der erfindungsgemäß erhaltenen Körper, Chlorwasserstoff freizusetzen, kann damit wenigstens teilweise aufgehoben werden.

Vorzugsweise können Kieselsäuren, Aluminate, Zirkonate, Calciumoxid, Calciumhydroxid, Zement, Calziumsulfat, organische Verbindungen enthaltende Bindemittel, zum Beispiel Kieselsäureester, oder ein Gemisch dieser Bindemittel eingesetzt werden. Falls organische Bindemittel eingesetzt werden, muss der organische Anteil in einem Kalzinierungsschritt vor Einsatz bei der Chlorsilanherstellung entfernt werden.

## Patentansprüche

1. Verfahren zur Aufbereitung feinteiliger Feststoffe bei der Herstellung von Chlorsilanen,
**dadurch gekennzeichnet,**
**dass** die feinteiligen Feststoffe während einer Zeitdauer von 1 min bis 24 h auf einer Temperatur von 25 °C bis 2500 °C gehalten werden,
wobei eine Agglomerierung der feinen Partikel im Volumen der feinteiligen Feststoffe eintritt.

2. Verfahren nach Anspruch 1, wobei eine Temperatur von 30 °C bis 500 °C und/oder eine Zeitdauer von 1 min bis 1 h gewählt wird.

3. Verfahren nach Anspruch 1, wobei feinteilige Feststoffe eingesetzt werden, deren feine Partikel einen mittleren Durchmesser d_{50%} von 1 bis 200 µm aufweisen.
